**Europäisches Patentamt**

**European Patent Office**

**Office européen des brevets**

(19)

(11) Veröffentlichungsnummer: **0 200 047**
**B1**

(12) # EUROPÄISCHE PATENTSCHRIFT

(45) Veröffentlichungstag der Patentschrift:
04.10.89

(51) Int. Cl.⁴: **B 65 G 47/68**

(21) Anmeldenummer: **86104926.0**

(22) Anmeldetag: **10.04.86**

(54) **Vorrichtung zum Linieren von Gebinden.**

(30) Priorität: **30.04.85 DE 3515595**

(43) Veröffentlichungstag der Anmeldung:
**05.11.86 Patentblatt 86/45**

(45) Bekanntmachung des Hinweises auf die Patenterteilung:
**04.10.89 Patentblatt 89/40**

(84) Benannte Vertragsstaaten:
**DE FR GB IT NL**

(56) Entgegenhaltungen:
**EP-A-0 120 245**
**DE-A-2 419 213**
**DE-A-3 025 092**
**DE-A-3 214 172**
**US-A-2 149 776**
**US-A-3 918 774**

(73) Patentinhaber: **Max Kettner**
**Verpackungsmaschinenfabrik GmbH & Co. KG,**
**Ottobrunner Strasse 1, D-8000 München 83 (DE)**

(72) Erfinder: **Zaissl, Peter, Fohrenweg 5, D-8201**
**Grosskarolinenfeld (DE)**

(74) Vertreter: **Dipl.- Ing. Schwabe, Dr. Dr. Sandmair,**
**Dr. Marx, Stuntzstrasse 16 Postfach 86 02 45,**
**D-8000 München 86 (DE)**

## Beschreibung

Die Erfindung betrifft eine Vorrichtung zum Linieren von in mehreren parallelen Reihen angeordneten Gebinden der im Oberbegriff des Anspruchs 1 angegebenen Gattung.

Als Gebinde kommen beispielsweise Kisten, Ballen, Kartons, Träger für Dosen und andere Behälter oder aber Flaschenkästen in Frage. Die dabei auftretenden Probleme sollen im folgenden am Beispiel von Flaschenkästen erörtert werden.

Wenn auf Paletten gestapelte Gebinde, nämlich Flaschenkästen, abgelagert werden, werden die einzelnen Kastenlagen nacheinander mittels einer entsprechenden Vorrichtung von der Palette abgehoben und auf einen Horizontalförderer abgesetzt. Der Horizontalförderer transportiert also zunächst eine Kolonne von in mehreren parallelen Reihen angeordneten Flaschenkästen. Der Weiterverarbeitung, bei Flaschenkästen beispielsweise eine Auspackanlage, müssen jedoch die einzelnen Gebinde in einer einzigen Reihe hintereinander zugeführt werden. Dazu müssen die Gebinde "liniert" werden.

Zu diesem Zweck ist es aus der DE-OS-3 025 092 bekannt, die einzelnen, zueinander parallelen Reihen auf mehrere, nebeneinander verlaufende Schmalförderer aufzusetzen, so daß sich jede Gebindereihe der Kolonne im wesentlichen auf einem gesonderten Förderstrang befindet.

Dann kann man die einzelnen Reihen nacheinander vom jeweiligen Schmalförderer abfördern lassen und einem einreihigen Förderer zuführen.

Das Aufsetzen der Gebinde auf die nebeneinander verlaufenden Schmalförderer kann in der Weise erfolgen, daß die einzelnen Schmalförderer nacheinander in Betrieb gesetzt werden, bis die gesamte Kolonne abtransportiert worden ist. Als Alternative hierzu können aber auch alle Schmalförderer ständig in Betrieb sein; dann werden die einzelnen, auf ihnen befindlichen Gebindereihen jeweils von einer aus dem Gebindeweg herausführbaren Schranke zurückgehalten. Letztere Ausführungsform wird bevorzugt eingesetzt. In diesem Fall können die einzelnen Schmalförderer zu einem einheitlichen, angetriebenen Horizontalförderer kombiniert sein, der ständig läuft, so daß der aufwendige Antrieb und die Steuerung für mehrere separate Schmalförderer nicht mehr erforderlich ist.

Bei einer solchen Vorrichtung treten nun insofern Schwierigkeiten auf, als die einzelnen Packlagen der Paletten nicht immer genau so aufgesetzt werden, daß jedes Gebinde exakt auf dem zugehörigen Teil des Horizontalförderers aufliegt. Außerdem sind die einzelnen Gebinde auf den Paletten oft im Verband verpackt, also so, daß beispielsweise Gebinde mit rechteckigem Grundriß zum Teil mit in Förderrichtung des Horizontalförderers weisender Langseite des Grundrisses auf den Horizontalförderer aufgesetzt werden, zum Teil aber auch mit den kürzeren Seiten des Grundrisses. Dadurch können die querstehenden Gebinde sich nicht nur über die Breite des zugehörigen Schmalförderers, sondern auch ein Stück über diese hinaus in die auf dem benachbarten Schmalförderer befindliche Gebindereihe hinein erstrecken. Dadurch wird das Abrufen einer Gebindereihe nach der anderen unmöglich gemacht, da beim Ablaufen einer Reihe die benachbarten Reihen gestört würden. Im gleichen Sinne wirkt auch die Tatsache, daß die Gebinde vielfach Vorsprünge, Rippen und dergleichen besitzen, mit denen sie während des Abtransportes aus der Kolonne aneinander hängen bleiben, gegen die benachbarten Gebinde bzw. die Gebindereihe stoßen und diese unter Umständen sogar in Drehung versetzen.

Diese Schwierigkeiten kann man dadurch vermeiden, daß man die nebeneinander verlaufenden Horizontalförderer als Rollenförderer ausbildet. Bei einem dieser Rollenförderer verlaufen die Drehachsen der Rolle genau senkrecht zur Förderrichtung und zur Längserstreckung derselben. Bei den beiden benachbarten, in der gleichen Richtung verlaufenden Rollenförderern sind die Rollenachsen zwar parallel zueinander, aber in einem Winkel von etwas weniger als 90° zur Förderlängsrichtung derart angeordnet, daß die Gebinde auf den beiden äußeren Schmalförderern nicht nur in Förderlängsrichtung bewegt, sondern aufgrund der schrägen Anordnung von der mittleren Gebindereihe wegbewegt werden. Hierbei muß also die ganze Kolonne von Gebinden zum seitlichen Auseinanderführen zunächst eine bestimmte Strecke, beispielsweise 1 bis 2 m, auf den drei Rollenförderern vorgeschoben werden, bis die Gebindereihen nicht mehr im Eingriff miteinander sind und die Gebinde jeder Reihe nur noch auf dem für diese Reihe bestimmten Schmalförderer liegen. Erst dann kann eine Reihe nach der anderen abgerufen werden. Das bedingt eine relativ große Länge der Vorrichtung. Außerdem führt die Verwendung von Rollenförderern mit schräg zur Förderlängsrichtung verlaufenden Rollen zu einem großen Herstellungsaufwand.

Aus der DE-OS-3 025 092 ist deshalb eine Vorrichtung zum Linieren von in mehreren parallelen Reihen angeordneten Gebinden der angegebenen Gattung bekannt, bei dem die Gebinde reihenweise in Förderrichtung transportiert und außerdem durch Querförderer voneinander getrennt werden. Diese Querförderer weisen Hubglieder mit über die Förderebene nach oben unter die jeweils zur Seite zu bewegenden Reihen, quer zur Förderrichtung des Horizontalförderers und wieder nach unten bewegbare, funktionelle Oberflächenbereiche auf, die insbesondere durch drehbar gelagerte Nocken gebildet werden.

Nachteilig ist bei dieser bekannten Trenneinrichtung für die einzelnen Gebindereihen der zusätzliche konstruktive Aufwand für die Hubglieder, die exakt synchronisiert mit der Förderung der Gebinde betätigt werden müssen.

Der Erfindung liegt deshalb die Aufgabe zugrunde, eine Vorrichtung zum Linieren von in mehreren parallelen Reihen angeordneten Gebinden der angegebenen Gattung zu schaffen, bei der die oben erwähnten Nachteile nicht auftreten.

Insbesondere soll eine Vorrichtung vorgeschlagen werden, die ohne zusätzliche bewegliche Konstruktionselemente die einwandfreie Trennung der einzelnen Gebindereihen voneinander gewährleistet.

Dies wird erfindungsgemäß durch die im kennzeichnenden Teil des Anspruchs 1 angegebenen Merkmale erreicht.

Zweckmäßige Ausführungsformen werden durch die Merkmale der Unteransprüche definiert.

Die mit der Erfindung erzielten Vorteile beruhen auf einer derartigen räumlichen Anordnung der einzelnen Schmalförderer, daß jede Berührung zwischen den einzelnen Gebindereihen sicher und zuverlässig ausgeschlossen wird. Hierzu werden die einzelnen, ebenen Schmalförderer in einem von 180° abweichenden Winkel zueinander angeordnet, wodurch ein sich nach oben erweiternder Spalt zwischen den einzelnen Gebindereihen entsteht, der den direkten Kontakt zwischen den einzelnen Gebindereihen ausschließt.

Sollen insgesamt drei Gebindereihen transportiert werden, wozu drei Schmalförderer erforderlich sind, so erhält der mittlere, ebene Schmalförderer die übliche horizontale Lage, während die beiden äußeren Schmalförderer, von dem mittleren Schmalförderer aus gesehen, etwas nach unten verlaufen und beispielsweise einen Winkel von etwa 175° mit dem mittleren Schmalförderer bilden.

Das gleiche Prinzip läßt sich auch bei Liniervorrichtungen einsetzen, die mehr als drei Gebindereihen verarbeiten müssen; in diesem Fall sollten die Schmalförderer so angeordnet werden, daß ihre Mittelpunkte auf einem Kreisbogen liegen. Auch dadurch erhalten die einzelnen Gebindereihen unterschiedliche Winkel zur Senkrechten, so daß zwischen den einzelnen Gebindereihen sich nach oben erweiternde Spalten entstehen, die den direkten Kontakt zwischen den einzelnen Gebindereihen ausschließen.

Die Erfindung wird im folgenden anhand eines Ausführungsbeispiels unter Bezugnahme auf die beiliegenden, schematischen Zeichnungen näher erläutert. Es zeigen

Fig. 1 eine Draufsicht auf eine erfindungsgemäße Vorrichtung zum Linieren von in mehreren parallelen Reihen angeordneten Flaschen-Kästen,

Fig. 2 eine Seitenansicht des Förderteils dieser Vorrichtung, und

Fig. 3 einen senkrechten Schnitt durch den Förderteil.

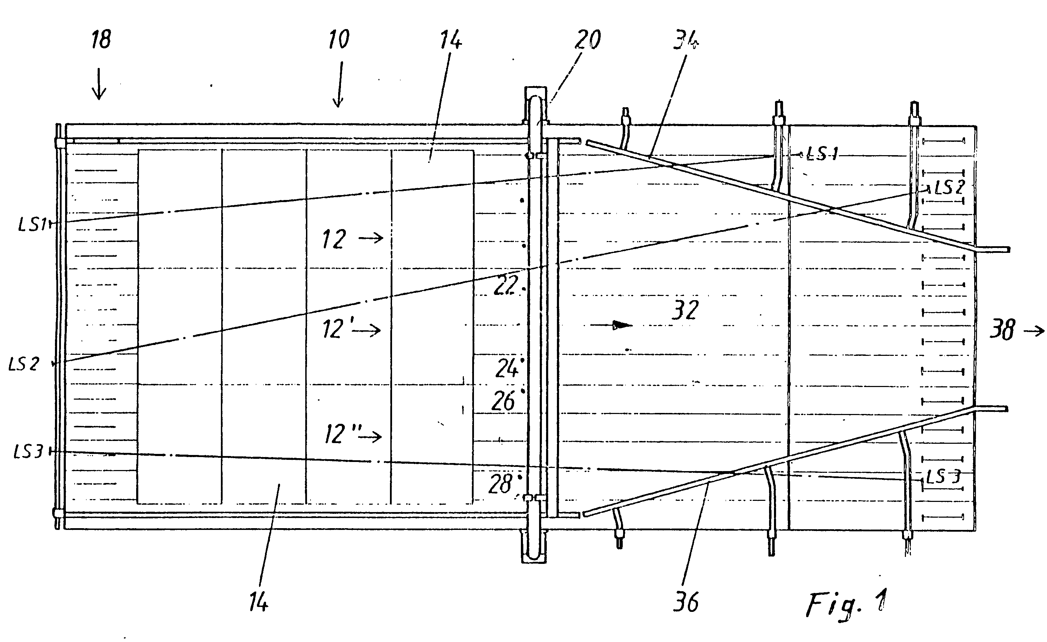

Fig. 1 zeigt eine Draufsicht auf den Grundaufbau einer durch das Bezugszeichen 10 angedeuteten Vorrichtung zum Linieren von in mehreren parallelen Reihen angeordneten Flaschenkästen, wie er im Prinzip aus der DE-OS-3 025 092 hervorgeht. Dabei sind, beispielsweise durch einen Entpalettierer (nicht dargestellt), drei Reihen von je vier Flaschenkästen auf einem Horizontalförderer abgestellt worden. Die Reihen 12 von Flaschenkästen 14 können jeweils reihenweise transportiert werden, wozu entweder getrennte, den einzelnen Reihen 12 zugeordnete Schmalförderer wahlweise angetrieben oder aber der Horizontalförderer ständig angetrieben und die einzelnen Reihen von Flaschenkästen 14 wahlweise durch Anschläge zurückgehalten werden. Die Ausführungsform nach Fig. 1 bis 3 benutzt die zweite Variante, also den ständigen Lauf des Horizontalförderers.

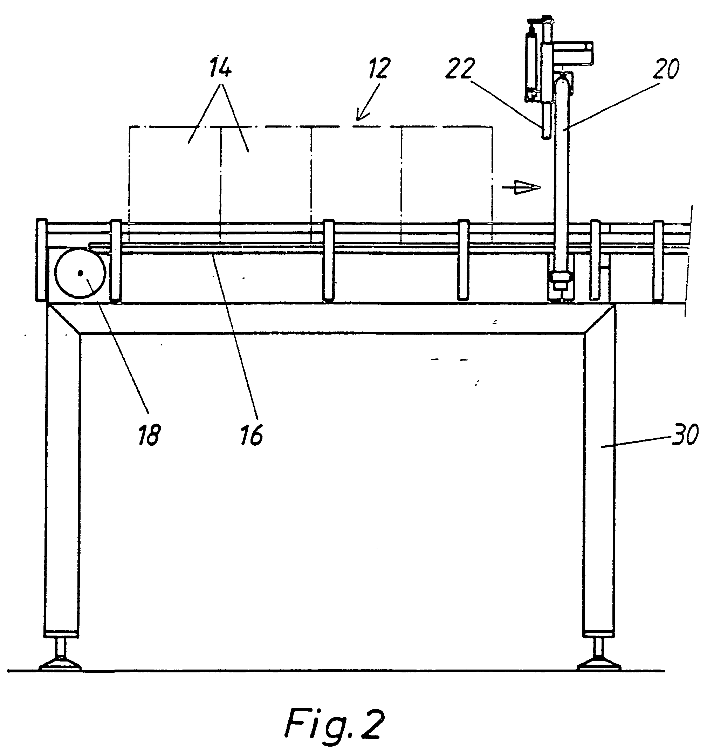

Jeder Schmalförderer für die Reihen 12 von Flaschenkästen 14 wird durch mehrere, nebeneinander angeordnete, endlose, umlaufende Förderbänder bzw. Förderketten 15, 17, 19 gebildet, die an ihren Enden über Antriebsrollen 18 laufen; in Fig. 2 ist eine der Antriebsrollen 18 zu erkennen.

Die Antriebsrollen 18 sind allen Förder-Bändern bzw. -Ketten zugeordnet, so daß die einzelnen Förderelemente und damit alle Schmalförderer 16 gemeinsam umlaufen.

Gemäß der Darstellung in Fig. 1 rechts neben der noch geschlossenen Kolonne von Flaschenkästen 14 befindet sich ein die durch den Pfeil angedeutete Transportstrecke überspannendes Portal 20, an dem in senkrechter Richtung verstellbare Anschläge 22, 24, 26 und 28 befestigt sind. Die Lagerung für den Anschlag 22 ist beispielsweise aus Fig. 2 ersichtlich. Aus dieser Figur ist auch die tischartige Basis 30 des Fördersystems zu erkennen.

In Förderrichtung rechts neben dem Portal 20 befindet sich ein trichterförmiger Einlaufbereich 32, der durch zwei aufeinanderzulaufende Seitenwände 34 und 36 begrenzt wird. Die Seitenwände 34, 36 definieren an ihrem Ende eine Auslaßöffnung 38 für die einzelnen Flaschenkästen 14.

Jeder Reihe 12 von Flaschenkästen 14 ist eine Lichtschranke aus einer Lichtquelle und einem photoelektrischen Wandler zugeordnet, und zwar die Lichtschranke $LS_1$ der in Transportrichtung gesehen linken Reihe 12 von Flaschenkästen 14, die Lichtschranke $LS_2$ der mittleren Reihe 12' von Flaschenkästen 14 und die Lichtschranke $LS_3$ der rechten Reihe 12'' von Flaschenkästen 14.

Ist eine aus drei Reihen 12, 12' und 12'' mit jeweils vier Flaschenkästen 14 gebildete Lage auf den Horizontalförderer abgesetzt worden, so unterbrechen die Kästen 14 alle drei Lichtschranken $LS_1$, $LS_2$ und $LS_3$, wodurch die Fördereinrichtung eingeschaltet wird, d.h., alle Schmalförderer 16 bewegen sich in Förderrichtung.

Gleichzeitig werden die Anschläge 22, 24, 26 und 28 nach unten bewegt, so daß sie den Transport der Reihen 12' und 12'' blockieren, wie man aus Fig. 1 erkennt.

Die Schmalförderer 16 laufen langsam an, bis sie die Anschläge 22 bis 28 erreichen. Dann erfolgt eine Polumschaltung auf Schnellauf der Schmalförderer 16.

Während die Reihen 12′ und 12″ durch die Anschläge 22 bis 28 zurückgehalten werden, können die Schmalförderer 16 die Reihe 12 aus der Kolonne heraus in den Einlaufbereich 32 transportieren, wo sie durch die Seitenwand 34 abgelenkt wird und in den Auslauf 38 gelangt.

Wenn der letzte Kasten 14 der Reihe 12 die Kolonne verlassen hat, ist der Lichtstrahl der Lichtschranke $LS_1$ nicht mehr unterbrochen, so daß die Lichtschranke $LS_1$ anspricht. Das entsprechende Ausgangssignal der Lichtschranke $LS_1$ erregt eine Steuereinrichtung (nicht dargestellt), die die beiden, der Reihe 12′ zugeordneten Anschläge 22 und 24 nach oben abhebt. Dadurch kann nun die Reihe 12′ abtransportiert werden.

Spricht nach dem Abtransport aller Kästen 14 der Reihe 12′ die Lichtschranke $LS_2$ an, so werden in entsprechender Weise die Anschläge 26 und 28 nach oben abgehoben, so daß nun die Reihe 12″ abtransportiert werden kann.

Spricht schließlich noch die Lichtschranke $LS_3$ an, so werden alle Schmalförderer 16 abgeschaltet, und es kann die nächste Lage aufgesetzt werden.

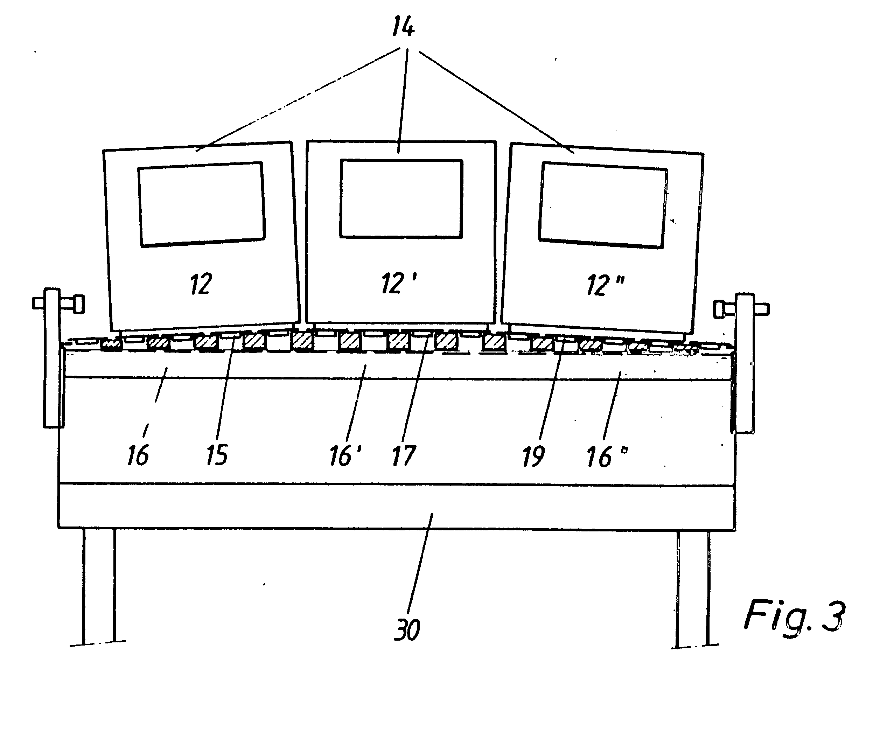

Wie man aus Fig. 3, die einen senkrechten Schnitt durch das Fördersystem mit den drei Reihen 12, 12′ und 12″ zeigt, erkennt, wird der Schmalförderer 16′ für die mittlere Reihe 12′ durch drei Förderelemente 17, also Förderbänder oder Förderketten, gebildet, deren Förderflächen eine plane, horizontale Ebene definieren. Die Kästen 14 in der mittleren Reihe 12′ haben also die übliche, horizontale Lage.

Die Schmalförderer 16 bzw. 16″ auf den beiden Seiten des mittleren Schmalförderers 16′ werden durch insgesamt fünf Förderelemente, also Förderbänder bzw. Förderketten 15 bzw. 19 gebildet, deren Förderflächen in einer Ebene liegen, die in einem von 180° abweichenden Winkel zu den Förderflächen der mittleren Schmalförderer 16′ angeordnet sind, nämlich etwas nach außen abfallen.

Der Winkel zwischen den Förderflächen der mittleren Schmalförderer 16′ und der beiden äußeren Schmalförderer 16 und 16″ sollte im Bereich zwischen 160 und 170° liegen.

Wie man aus Fig. 3 erkennt, erhalten dadurch die Flaschenkästen 14 in den beiden äußeren Reihen 12 und 12′ eine etwas nach außen geneigte Lage, d.h., zwischen den Kästen der mittleren Reihe 12′ einerseits und den beiden äußeren Reihen 12 und 12″ andererseits entsteht ein sich nach oben erweiternder Spalt, der die direkte Berührung zwischen den Reihen von Kästen ausschließt. Es besteht also keine Gefahr, daß beim Abtransport der einzelnen Kästen sich die Reihen 12, 12′ und 12″ gegenseitig behindern.

Die Figuren 1 und 3 zeigen eine Ausführungsform mit drei Reihen 12, 12′ und 12″ von Kästen, deren Schmalförderer die aus Fig. 3 ersichtliche räumliche Lage zueinander haben.

Sollen mehr als drei Reihen 12 von Kästen 14 liniert werden, so müssen die den einzelnen Reihen zugeordneten Schmalförderer 16 entsprechend angeordnet werden.

Es hat sich als zweckmäßig herausgestellt, wenn die Mittelpunkte der einzelnen Schmalförderer auf einem Kreisbogen liegen, der gemäß der Darstellung in Fig. 3 die gesamte Förderfläche überspannt. Es ergeben sich dann ebenfalls Spalte zwischen den einzelnen Reihen 12 von Kästen 14, die die gegenseitige Berührung ausschließen.

Bisher wurden die Förderflächen für die Reihen 12 von Kästen 14 durch einzelne Förderelemente 15, 17 und 19 gebildet, die wiederum zu Schmalförderern 16, 16′ und 16″ für die einzelnen Reihen kombiniert wurden. Als Alternative hierzu ist auch die Verwendung einer einzigen, geschlossenen Förderfläche, beispielsweise eines entsprechend breiten Förderbandes möglich, das auf die entsprechende Weise gewölbt ist, beispielsweise der aus Fig. 3 ersichtlichen Kontur folgt. Dazu kann ein flexibles Förderband dienen, beispielsweise aus einem elastomeren Material oder einem flexiblen Metall, das durch Rollen die erforderliche aus Fig. 3 ersichtliche Kontur erhält, bei der die mittlere Reihe 12′ auf einer ebenen Förderfläche und die beiden äußeren Reihen 12 und 12″ auf leicht nach außen und unten geneigten Förderflächen stehen, um auf diese Weise die aus Fig. 3 ersichtlichen Zwischenräume zwischen den Reihen von Kästen zu erhalten.

## Patentansprüche

1. Vorrichtung zum Linieren von in mehreren parallelen Reihen angeordneten Gebinden (14) mit einem Fördersystem für den Transport der einzelnen Reihen von Gebinden nacheinander zu einem Auslaufbereich (38) und mit einer Einrichtung (20 - 28) zur reihenweisen Trennung der Gebinde voneinander, dadurch gekennzeichnet, daß die Fördereinrichtung (16, 16′, 16″; 15, 17, 19) den einzelnen Reihen (12, 12′, 12″) von Gebinden (14) zugeordnete Förderbereiche aufweist, die, im senkrechten Schnitt quer zur Förderrichtung gesehen, eine nach oben gewölbte, etwa bogenförmige Kontur bilden.

2. Vorrichtung nach Anspruch 1, dadurch gekennzeichnet, daß bei drei Reihen (12, 12′, 12″) von Gebinden (14) die mittlere Förderfläche eine ebene, horizontale Oberfläche hat, und daß die beiden äußeren Förderflächen eine ebene Oberfläche haben, die in einem Winkel von etwa 160 bis 170° von der mittleren Förderfläche nach unten verläuft.

3. Vorrichtung nach Anspruch 1, dadurch gekennzeichnet, daß bei mehr als drei Reihen (12) von Gebinden (14) die Mittelpunkte der einzelnen Reihen (12) zugeordneten Förderflächen auf einem Kreisbogen liegen.

4. Vorrichtung nach einem der Ansprüche 1 bis 3, dadurch gekennzeichnet, daß die Förderbereiche (16, 16′, 16″) durch mehrere, nebeneinander angeordnete Förderelemente, insbesondere Förderbänder bzw. Förderketten (15, 17, 19) gebildet werden.

5. Vorrichtung nach einem der Ansprüche 1 bis 3, dadurch gekennzeichnet, daß die Fördereinrichtung eine geschlossene Förderfläche aufweist, die ihre gewölbte Form durch die entsprechende Form von Transportrollen erhält.

## Claims

1. An apparatus for bringing packages (14), arranged in a plurality of parallel rows, into one line, having a conveyor system for conveying the individual rows of packages successively to a delivery region (38), and having a device (20 - 28) for separating the packages from one another, row by row, characterised in that the conveyor device (16, 16', 16''; 15, 17, 19) comprises conveying regions which are associated with the individual rows (12, 12', 12'') of packages and which, seen in vertical section transversely to the conveying direction, form a substantially arcuate contour arched upwards.

2. An apparatus according to Claim 1, characterised in that, with three rows (12, 12', 12'') of packages (14), the middle conveying surface has a plane, horizontal upper surface, and that the two outer conveying surfaces have a plane upper surface which extends downwards from the middle conveying surface at an angle of about 160 to 170°.

3. An apparatus according to Claim 1, characterised in that, with more than three rows (12) of packages (14), the central points of the conveying surfaces associated with the individual rows (12) lie on an arc of a circle.

4. An apparatus according to any one of Claims 1 to 3, characterised in that the conveying regions (16 16', 16'') are formed by a plurality of conveyor elements arranged side by side, particularly conveyor belts or conveyor chains (15, 17, 19).

5. An apparatus according to any one of Claims 1 to 3, characterised in that the conveyor device has a closed conveying surface which receives its arched shape through the corresponding shape of driving rollers.

## Revendications

1. Dispositif de mise en ligne de conteneurs (14) placés en plusieurs rangées parallèles, comprenant un système transporteur pour le transport successif des différentes rangées de conteneurs vers une zone de sortie (38) et un dispositif (20 à 28) destiné à séparer les conteneurs par rangées, caractérisé en ce que le transporteur (16, 16', 16''; 15, 17, 19) comporte des sections de transport associées aux différentes rangées (12, 12', 12'') de conteneurs (14) et présentant, vu en coupe verticale, transversalement à la direction de transport, un contour sensiblement en arc cintré vers le haut.

2. Dispositif selon la revendication 1, caractérisé en ce que, pour trois rangées (12, 12', 12'') de conteneurs (14), la section de transport médiane présente une surface horizontale plane, et que les deux sections de transport extérieures présentent une surface plane qui est inclinée vers le bas sous un angle d'environ 160 à 170° par rapport à la section de transport médiane.

3. Dispositif selon la revendication 1, caractérisé en ce que, pour plus de trois rangées (12) de conteneurs (14), les centres des sections de transport associées aux différentes rangées (12) se situent sur un arc de cercle.

4. Dispositif selon l'une des revendications 1 à 3, caractérisé en ce que les sections de transport (16, 16', 16'') sont constituées par plusieurs éléments de transport juxtaposés, en particulier des bandes et respectivement des chaînes transporteuses (15, 17, 19).

5. Dispositif selon l'une des revendications 1 à 3, caractérisé en ce que le transporteur comprend une surface transporteuse continue dont la forme cintrée est obtenue par la forme correspondante des galets de roulement.

Fig. 1

EP 0 200 047 B1

Fig.2

Fig. 3